# EUROPÄISCHE PATENTSCHRIFT

(11) **EP 0 379 889 B1**
(45) Veröffentlichungstag und Bekanntmachung des Hinweises auf die Patenterteilung: **12.04.1995**
(21) Anmeldenummer: 90100426.7
(22) Anmeldetag: 10.01.1990
(51) Int. Cl.: H04N 1/16

(54) **Fernsteuerung ausgewählter Fernsehempfänger**
Remote control of selected television receivers
Commande à distance de récepteurs de télévision sélectionnés

(30) Priorität: 21.01.1989 DE 3901790
(43) Veröffentlichungstag der Anmeldung: 01.08.1990
(73) Patentinhaber: GfK AG, D-90419 Nürnberg (DE); FRAUNHOFER-GESELLSCHAFT ZUR FÖRDERUNG DER ANGEWANDTEN FORSCHUNG E.V., 80636 München (DE)
(72) Erfinder: Skutta, Hans, D-8439 Postbauer-Heng (DE); Nöther, Frank, D-8500 Nürnberg (DE); Gerhäuser, Heinz Dr.-Ing., D-8551 Waischenfeld (DE); Schott, Hartmut, D-8520 Erlangen (DE)
(74) Vertreter: Schneck, Herbert, Dipl.-Phys., Dr.

(56) Entgegenhaltungen:
- DE-A- 3 144 946
- GB-A- 2 138 642
- US-A- 3 639 686
- US-A- 4 404 589
- US-A- 4 733 301

## Beschreibung

Die Erfindung richtet sich auf ein Verfahren zum Ersetzen eines bestimmten Programmteils bei der Übertragung eines Fernsehprogramms durch einen gesondert gesendeten Programmteil für bestimmte, ausgewählte Empfänger, insbesondere eines TV-Werbespots durch einen anderen Werbespot für ein zu testendes neues Produkt, auf ein Haushalts-Endgerät als Vorschaltgerät für handelsübliche Fernsehempfänger zur Durchführung dieses Verfahrens, und auf ein Betriebsverfahren für ein derartiges Haushalts-Endgerät mit zwei Tunern und einer Anordnung zur Erfassung des Betriebszustandes eines Videorecorders.

Aus der US-A-3 639 686 ist ein Fernsehgerät mit einem Mehrkanaltuner bekannt, wobei darüber hinaus ein Einkanaltuner für einen FM-Empfänger vorgesehen ist, und wobei diesem Einkanal-FM-Tuner eine gesonderte Hilfsantenne vorgeschaltet ist. Durch das Aussenden eines Hilfssignals kann der FM-Empfänger und ein nachgeordneter Dekoder angesprochen werden, um die Kanalwahl des Mehrkanaltuners für das Fernsehbild umzustellen, wenn beispielsweise das normale Fernsehprogramm auf einen Informationskanal für Notstandsmeldungen od.dgl. umgeschaltet werden soll.

Die DE-A-31 44 946 beschreibt allgemein die Möglichkeit, zusätzliche Informationen in den nicht sichtbaren Bildzeilen zu übertragen.

Aus GB-A-2 138 642 ist es bekannt, den Einschaltzustand eines Videorekorders zu erfassen.

Für die Erstellung von Marktanalysen ist es von großem Interesse, wie bestimmte Werbeausstrahlungen in der Fernsehwerbung beim Verbraucher ankommen und wie diese das Einkaufsverhalten des Verbrauchers beeinflussen. Herkömmlicherweise war es in diesem Zusammenhang bekannt, einem bestimmten, ausgewählten, als etwa repräsentativ anzusehenden Personenkreis in Sonderveranstaltungen solche Werbespots vorzuführen und nach der Reaktion dieser Testpersonen zu fragen. Derartige Vorführungen unter herausgehobenen, nicht dem Alltagszustand entsprechenden Bedingungen lassen jedoch keine Aufschlüsse über das spontane, unreflektierte Verhalten der angesprochenen Zuschauer zu oder geben hierfür allenfalls einen bedingt aussagefähigen Anhalt.

In dem Bemühen, äußere Einflüsse auf das Verhalten der zu untersuchenden Testpersonen weitestgehend auszuschalten und die unmittelbare Kaufreaktion erfassen zu können, hat die Anmelderin deshalb eine neue Art von Testmarktforschung initiiert, bei welcher in einer Gemeinde mit weitgehend repräsentativer Bevölkerungszusammensetzung und einem bestehenden Kabelanschluß für alle in Betracht kommenden Haushalte ein völlig neues Verfahren konzipiert wurde. Bei diesem werden mittels eines auf einem zusätzlichen Datenträger aufmodulierten Steuerdatentelegramms in einem Breitbandkabelnetz bestimmte bestehende Werbespots durch einen zu testenden, bei bestimmten, adressierten Haushalten eingeblendeten, Werbespot mit einem durch Wiederholung bestimmten Werbedruck ersetzt. Um die Reaktion auf die Wirkung eines solchen neuen Werbespots für ein in der Regel neues Produkt zu messen, wird das beworbene Produkt in den örtlichen Geschäften angeboten und mit Hilfe sogenannter Scanner-Kassen der Abverkauf und somit der sogenannte Werbedruck erfaßt. So kann festgestellt werden, ob die durch den Werbespot angesprochenen Haushalte im Vergleich zu den nicht angesprochenen Haushalten überproportional ein bestimmtes, beworbenes Produkt kaufen.

Der technische und damit gleichzeitig auch demoskopische Nachteil dieses Verfahrens liegt in dem Erfordernis eines zusätzlichen, nicht auf Dauer genehmigungsfähigen Steuerdatenträgers auf der BK-Anlage, so daß dieses Verfahren nur in wenigen, ausgewählten, voll verkabelten Gemeinden ausnahmsweise realisiert werden könnte, welche von den technischen Vorausssetzungen her und gleichzeitig auch von der Bevölkerungszusammensetzung die erforderlichen Voraussetzungen bieten.

Demgegenüber wäre es für einen erweiterten Einsatz dieses im Prinzip demoskopisch außerordentlich interessanten Verfahrens wünschenswert, beliebige, nach rein demoskopischen Kriterien auswählbare Haushalte erfassen bzw. mit derartigen Werbespots versorgen zu können.

Diese Aufgabe wird bei einem Verfahren gemäß dem Oberbegriff des Anspruchs 1 (basiert auf US-A-3 639 686) erfindungsgemäß dadurch gelöst, daß zur Steuerung der Fernsehsignale für den zu ersetzenden Programmteil biphase modulierte Startcodes in Form von Umschalt-Datentelegramme für den gesondert gesendeten Programmteil in den Bildzeilen außerhalb des auf dem Bildschirm sichtbaren Fernsehbildes übertragen werden. Auf diese Weise ist eine Übertragung im Rahmen des üblichen Farbbild-Austast-Synchronsignals (FBAS-Signal) möglich, so daß beliebige Fernsehempfänger in beliebiger örtlicher Verteilung im Sendegebiet adressiert werden können, wobei Voraussetzung lediglich ist, daß diese Fernsehempfänger über eine entsprechende Decodiereinrichtung verfügen. Man macht sich bei diesem erfindungsgemäßen Verfahren also den Umstand zunutze, daß z.B. gemäß den PAL-Empfehlungen über die für den Zuschauer bestimmte Bildinformation hinaus 23 Daten-und Meßsignalzeilen gesendet werden, welche herkömmlicherweise bereits Videotext-Informationen und VPS-Informationen für die automatische Videorecorder-Programmierung enthalten. In den frei bleibenden, durch Informationen noch nicht belegten Bildzeilen kann das erfindungsgemäß vorgesehene Codesignal für das Ein-und Ausblenden eines gesonderten Programmteils untergebracht werden. Neben dem demoskopischen Vorteil einer frei wählbaren Empfängerverteilung ergibt sich hierdurch auch noch der praktische Vorteil, daß zur Decodierung eines derartigen Codesignals handelsübliche Decodierer verwendet werden können, wie sie z.B. bereits für das VPS-System zur Verfügung stehen, so daß die erforderlichen Vorschaltgeräte insoweit sehr kostengünstig realisiert werden können.

Vorteilhafterweise werden die Startcodes am unteren Rand des gesamten übertragenen Fernsehbildes über die bestehenden Bildinformationen überlagert, wodurch insbesondere bei einem nach einer europäischen Norm arbeitenden System zwei Datentelegramme für je ein Halbbild in den Bildzeilen 309, 310 und 622, 623 übertragen werden können, ohne mit den bereits bestehenden Belegungsempfehlungen des CCIR für die Zeilen am oberen Bildrand zu kollidieren.

Diese Anordnung der Datentelegramme bringt den Vorteil mit sich, daß dieser Bereich zwar mit Bildinformation belegt ist, jedoch in diesem Bereich wegen der üblichen Einstelltechniken des Fernsehbildes auch sichergestellt ist, daß er außerhalb des sichtbaren Bereiches zu liegen kommt. Dies beruht darauf, daß Fernsehtechniker beim Justieren des Fernsehbildes üblicherweise so vorgehen, daß dieses von unten nach oben auf dem Bildschirm solange verschoben wird, bis gerade die letzte Meßsignal-Zeile nicht mehr flimmernd erkennbar ist. Hierdurch ist gewährleistet, daß die am unteren Rand bestehenden Reservezeilen nicht in das sichtbare Bild gelangen.

Die Erfindung betrifft auch ein Haushalts-Endgerät als Vorschaltgerät für handelsübliche Fernsehempfänger. Derartige Vorschaltgeräte als solche sind bereits zur Erfassung des Einschaltzustandes eines zugeordneten Fernsehgeräts bzw. Videorecorders und der jeweils eingeschalteten Programme bekannt. Mittels eines Zwischenspeichers und eines Modem können diese Geräte über eine Telefonleitung abgefragt werden. Ein erfindungsgemäßes Haushalts-Endgerät zeichnet sich aus durch wenigstens zwei Fernseh-Empfangs Tuner (24, 25), deren Ausgänge mit einer Überblendbaugruppe (30) verbunden sind, sowie eine Decodierschaltungsanordnung (28)zur Decodierung eines Umschalt-Codesignals. Das Vorsehen von zwei derartigen Tunern in einem Vorschaltgerät macht es möglich, daß der jeweilige Haushalt sein Fernsehgerät über eine Fernsteuerung in gewohnter Weise betätigen kann, ohne daß beim Umschalten akustisch wahrnehmbare Phasensprünge in den Tonhilfsträgern auftreten. Allerdings wird der in dem Fernsehgerät selbst vorhandene Empfänger deaktiviert und die Kanalwahl über den ersten Tuner des Vorschaltgerätes vorgenommen. Der zweite Tuner des Vorschaltgerätes ist auf das dem Ersatzprogramm entsprechende Fernsehsignal eingestellt. Durch den Empfang eines Start-Code-Signals in der Decodierschaltungsanordnung wird eine Umschaltung von einem Tuner zum anderen ausgelöst, so daß diese nach einer derartigen Umschaltung das von dem zweiten Tuner empfangene Programm, also z.B. einen Test-Werbespot, empfängt und in das Fernsehgerät über den Antenneneingang einspeist.

Weiterhin umfaßt ein derartiges Haushalts-Endgerät vorzugsweise eine Synchronisationsschaltungsanordnung zur Synchronisation der Überblendbaugruppe, welche die mit dem FBAS-Signal ausgesandten Zeilensynchronimpulse detektiert. Die Synchronrahmen-Detektoranordnung kann auch dafür sorgen, daß eine gewisse Anzahl von Zeilen-Synchronisationsimpulsen unterdrückt wird, so daß nur solche Bildzeilen ausgelesen werden, in welchen ein für das Steuerdatentelegramm spezifisches Start-Code-Signal zu erwarten ist.

Insbesondere ist vorgesehen, daß die Synchronrahmen-Detektoreinrichtung die Überblendbaugruppe von dem Originalprogramm zu dem synchron ausgestrahlten Ersatzprogramm halbbildsynchron in der vertikalen Austastecke umschaltet. Hierdurch wird eine halbbildsynchrone Umschaltung unter Vermeidung von Bildstörungen erreicht. Grundvoraussetzung hierfür ist die Synchronität der über den Originalkanal und den Ersatzkanal gesendeten Bildinformationen, welche in der Sendezentrale bewerkstelligt werden muß. Durch ein langsames, d.h. in der Größenordnung von 20 ms liegendes Absenken des Original-Tonsignals und Anheben des Ersatz-Tonsignals wird erreicht, daß keine Knackgeräusche aufgrund von Amplitudensprüngen wahrgenommen werden.

Ein dritter Tuner in dem Haushalts-Endgerät kann dann erforderlich und vorteilhaft sein, wenn ein Videorecorder erfaßt werden soll, welcher keinen AV-Ausgang aufweist. In diesem Fall muß der dritte Tuner das HF-Signal des Videorecorders in das Basisband umsetzen. Im übrigen können in dem Haushalts-Endgerät noch Steckplätze vorbereitet sein, in denen weitere Tuner für TV-Signale mit neuen Normen eingesetzt werden können.

Die Erfindung betrifft auch ein Verfahren zum Betrieb eines derartigen Haushalts-Endgeräts, bei welchem auch der Betriebszustand eines Videorecorders erfaßt werden soll (wie aus GB-A-2138642 bekannt), wobei sich ein derartiges Verfahren dadurch auszeichnet, daß der erste Tuner zum Empfang des Originalprogramms und der zweite Tuner zum Empfang des Ersatzprogramms eingestellt wird, daß der zweite Tuner die am Videorecorder eingestellte Frequenz durch einen Scanning- und Vergleichsdurchlauf erfaßt, wenn das Originalprogramm gesendet wird, wobei der zweite Tuner kontinuierlich zwischen einem Empfangsmodus und einem Scanningmodus umgeschaltet wird, und daß beim Empfang eines Codesignals für das Ersatzprogramm der Scanning-Vorgang durch den zweiten Tuner abgebrochen und vom ersten Tuner übernommen wird. Hierdurch kann das an dem Videorecorder eingestellte Programm mit der erforderlichen Genauigkeit jederzeit erfaßt werden, ohne daß die Verwendung eines weiteren Tuners hierfür erforderlich wäre.

Nachfolgend wird die Erfindung anhand eines bevorzugten Ausführungsbeispiels im Zusammenhang mit der Zeichnung näher beschrieben. Dabei zeigen
- Fig. 1: eine schematische Darstellung der wesentlichen Baugruppen im Zusammenhang mit dem erfindungsgemäßen Verfahren,
- Fig. 2: eine blockschaltbildartige Darstellung eines erfindungsgemäßen Haushalts-Endgeräts und
- Fig. 3: ein Zeit-Ablaufdiagramm zur Veranschaulichung des erfindungsgemäßen Betriebsverfahrens.

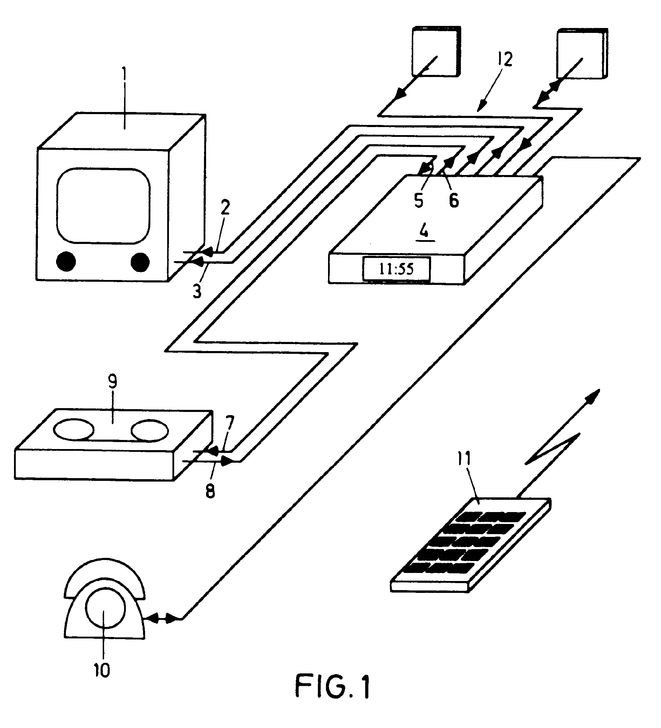

In Fig. 1 ist schematisch ein handelsübliches Fernsehgerät 1 mit einem sogenannten AV-Eingang 2 und einem Antenneneingang 3 dargestellt. Diesem ist ein als Haushalts-Endgerät bezeichnetes Gerät 4 vorgeschaltet, welches über einen Eingang 5 und einen Ausgang 6 mit dem Eingang 7 bzw. dem Ausgang 8 eines Videorecorders 9 verbunden ist. Das Haushalts-Endgerät 4 ist über ein nicht dargestelltes Modem weiterhin mit einem Telefon 10 verbunden und läßt sich über eine Fernsteuereinrichtung 11 über einen eingebauten Empfänger fern steuern. Weiterhin weist das Haushalts-Endgerät Eingänge und Ausgänge in Form serieller Schnittstellen 12 für weitere Haushalts-Endgeräte bzw. für Installations- und Servicezwecke auf.

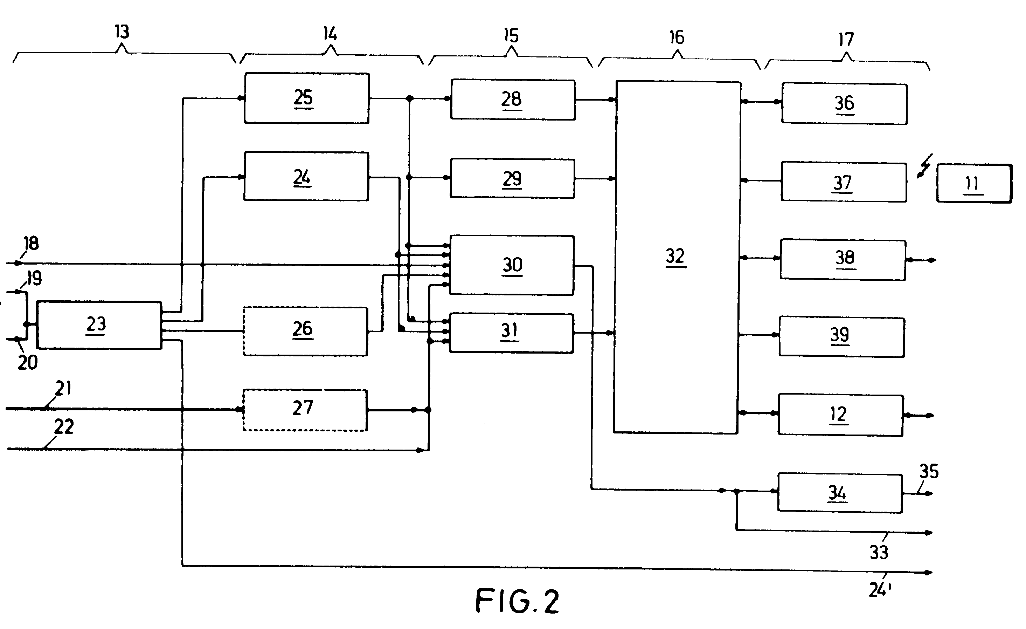

Wie sich aus der blockschaltbildartigen Darstellung in Fig. 2 ergibt, umfaßt das Haushalts-Endgerät 4 einen HF-Signalaufbereitungsteil 13, einen HF-Signalverarbeitungsteil 14, einen NF-Signalverarbeitungsteil 15, einen Steuerungsteil 16 und einen für weitere Funktionen vorgesehenen Schaltungsteil 17 auf.

Der HF-Signalaufbereitungsteil weist einen zweiten AV-Eingang 18, einen zweiten HF-(Antennen)-Eingang 19, einen Antenneneingang 20, einen Eingang 21 für den Antennenausgang des Videorecorders und einen Eingang 22 für den AV-Ausgang des Videorecorders 9 auf. Dem zweiten HF-Eingang 19 und dem Antenneneingang 20 ist eine Schaltungsanordnung 23 zur Aufbereitung der Signale nachgeschaltet, die von einem Breitbandkabelanschluß kommen.

Der HF-Signalverarbeitungsteil 14 umfaßt einen zweiten Tuner 25 für den sogenannten Targetkanal, d.h. den Kanal, auf welchem das Ersatzprogramm gesendet wird, sowie für Steuerdaten und zur Kanalwahlerkennung des Videorecorders 9 in den nachstehend beschriebenen Weise. Weiterhin ist ein erster Tuner 24 für den vom Haushalt jeweils gewählten Kanal bzw. zur Kanalwahlerkennung des Videorecorders 9 vorgesehen. Außerdem ist ein Reservesteckplatz 26 für einen odere mehrere weitere Tuner für Kanäle mit neuen TV-Normen vorgesehen. Diese Tuner sind der Schaltungsanordnung 23 nachgeschaltet. Außerdem weist die Schaltungsanordnung 23 einen Ausgang auf, der mit einem Ausgang 24 zum Antenneneingang des Videorecorders verbunden ist. Ein weiterer Tuner 27 kann vorgesehen sein für den Ausgangskanal eines Videorecorders ohne AV-Anschluß.

Der NF-Signalverarbeitungsteil 15 umfaßt eine Decodiereinrichtung für das Datentelegramm für das einzublendende Ersatzprogramm, d.h. im einfachsten Fall einen als solchen bekannten, jedoch modifizierten, VPS-Decoder 28. Weierhin ist ein Detektor 29 für den Synchronrahmen des TV-Signals vorgesehen. Beide, d.h. Decoder 28 und Detektor 29 sind dem zweiten Tuner 25 nachgeordnet.

Sämtlichen Tunern 24,25 und gegebenenfalls 26,27 nachgeordnet ist eine Überblendungsbaugruppe 30, welche dazu dient, in Abhängigkeit von dem Eintreffen eines Datentelegramms eine halbbildgenaue Umschaltung zwischen dem ersten und zweiten Tuner, d.h. zwischen dem Originalprogramm und dem Ersatzprogramm vorzunehmen.

Weiterhin umfaßt der NF-Signalverarbeitungsteil 15 einen Signalvergleicher 31 zur Erkennung der Kanalwahl des Videorecorders.

Die Steuerung 16 umfaßt im wesentlichen eine zentrale Steuerlogik mit Datenspeicher 32 und ist mit den Ausgängen des Decoders 28, des Detektors 29 und des Signalvergleichers 31 verbunden.

Die Überblendungsbaugruppe 30 ist direkt mit einem Ausgang 33 für den AV-Eingang des Fernsehgeräts 1 und über einen Modulator 34 für Fernsehgeräte ohne AV-Anschluß mit einem Ausgang 35 zum Antenneneingang des Fernsehgeräts verbunden.

Der zentralen Steuerung nachgeschaltet ist im Schaltungsteil 17 eine Echtzeituhr 36, ein Empfänger 37 für die Steuersignale des Fernbedienungssenders 11, ein Modem 38 zum Anschluß an das Fernsprechnetz, eine Anzeige 39 für die Programmwahl und zur Darstellung der vor dem Fernsehgerät 1 anwesenden Personen sowie die bereits angesprochene serielle Schnittstelle 12 zum Anschluß weiterer Haushalts-Endgeräte und für Installationszwecke.

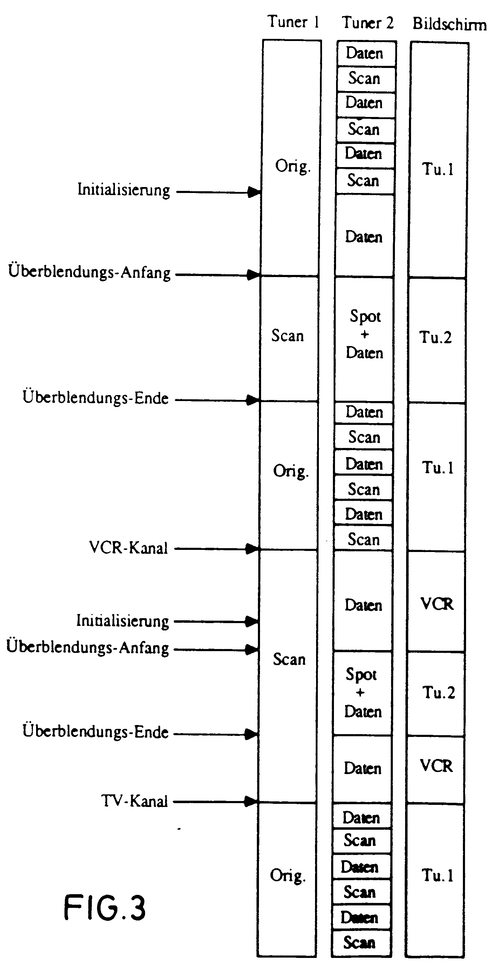

Das vorstehend im Zusammenhang mit Fig. 2 beschriebene Haushalts-Endgerät 4 wird so betrieben, wie dies anhand des Zeitdiagramms in Fig. 3 dargestellt ist. Dabei ist von oben nach unten die Zeitachse aufgetragen, wobei die linke Säule den Zustand des ersten Tuners, die mittlere Säule den Zustand des zweiten Tuners und die rechte Säule das an den Bildschirm ausgegebene Signal zeigt. Links der linken Säule sind die aufeinanderfolgenden Zustandsänderungen gekennzeichnet. In dem Diagramm ist der Empfang des Originalprogramms durch einen Tuner als "Orig.", die Durchführung eines Scanning-Vorgangs zur Ermittlung des gewählten Kanals mit "Scan.", die Abfrage übermittelter Daten mit "Daten", das eingeblendete, von einem Tuner empfangene Ersatzprogramm als "Spot" und der Videorecorder als "VCR" abgekürzt.

Der in dem HF-Signalverarbeitungsteil 14 vorgesehene erste Tuner 24 liefert den vom Haushalt gewählten Kanal, d.h. das Originalprogramm. Der zweite Tuner 25 wird dazu verwendet, den aktuellen Kanal des angeschlossenen Videorecorders 9 zu ermitteln. Dies geschieht mit Hilfe des Signalvergleichers 31, der in der Lage ist, eine Übereinstimmung zwischen dem Ausgangssignal des Videorecorders 9 und des Tuners 24 bzw. 25 festzustellen, indem die Gleichheit der beiderseitigen Basisbandsignale ermittelt wird. Vorzugsweise wird dies so realisiert, daß die beiden Tonsignale verglichen werden, und zwar günstigerweise nur über einen beschränkten Frequenzbereich von beispielsweise etwa 400 Hz bis 1 kHz. Ist die Differenz dieser beiden Signale genügend klein, kann mit relativ großer Wahrscheinlichkeit davon ausgegangen werden, daß bei beiden die gleiche Toninformation und damit der identische Kanal vorliegt. In der Regel kann hieraus auch darauf geschlossen werden, daß die gleiche Bildinformation gegeben ist.

Ausgehend von dem oberen Teil in Fig. 3 wird also durch den ersten Tuner 24 zunächst das Originalprogramm empfangen, wobei der zweite Tuner 25 laufend mit einer fest vorgegebenen Umschaltfrequenz zwischen dem Empfang von Daten und einem Suchvorgang (Scanning-Durchlauf) zur Feststellung des eingestellten Videorecorder-Kanals wechselt.

Wird nun eine Überblendung initialisiert, indem ein Start-Code ausgestrahlt wird, wird zunächst kein Scanning-Vorgang mehr realisiert, um eine bildsynchrone Reaktion auf den Überblendvorgang im Wechselspiel der beiden Tuner 24,25 zu ermöglichen.

Nach dem Anfang der Überblendung muß das Originalprogramm nicht mehr empfangen werden, da ja auf den Bildschirm der Ausgang des zweiten Tuners 25 gegeben wird, der den eingeblendeten Werbespot empfängt. Damit steht der erste Tuner 24 für den Scanning-Vorgang zur Verfügung, welcher nun von diesem laufend durchgeführt wird. Der zweite Tuner 25 kann währenddessen ungestört auf das Ende der Überblendung warten, wobei nach dem Ende der Überblendung das Gerät wieder in den eingangs beschriebenen, in Fig. 3 in der Mitte dargestellten Zustand zurückkehrt.

Beim Einschalten des Videorecorders, welches durch Anwählen eines bestimmten Kanals an der Fernsteuerung 11 eingeleitet wird, ist der erste Tuner 24 für den Scanning-Vorgang frei verfügbar, da ein Empfang des Originalprogramms nicht erforderlich ist. Dementsprechend kann der zweite Tuner 25 permanent in einem Wartezustand zum Empfang von Daten verbleiben. Das Überblenden erfolgt, wie im unteren Teil von Fig. 3 dargestellt, analog wie beim Fernsehempfang. Nach dem Ende der Überblendung und nach einem möglichen Zurückschalten auf Fernsehempfang wird der eingangs beschriebene, in Fig. 3 ganz unten dargestellte Zustand wieder hergestellt.

## Patentansprüche

1. Verfahren zum Ersetzen eines bestimmten Programmteils eines Fernsehprogramms bei der Übertragung durch einen gesondert gesendeten Programmteil für bestimmte, ausgewählte Empfänger, nämlich eines TV-Werbespots durch einen anderen Werbespot für ein zu testendes neues Produkt, dadurch gekennzeichnet, daß zur Steuerung der Fernsehsignale für den zu ersetzenden Programmteil biphase-modulierte Startcodes in Form eines Umschalt-Datentelegramms für den gesondert gesendeten Programmteil in den Bildzeilen außerhalb des auf dem Bildschirm sichtbaren Fernsehbildes übertragen werden.

2. Verfahren nach Anspruch 1, dadurch gekennzeichnet, daß die Startcodes am unteren Rand des gesamten übertragenen Fernsehbildes bzw. der entsprechenden Bildinformation angeordnet werden.

3. Verfahren nach Anspruch 2, dadurch gekennzeichnet, daß zwei Datentelegramme mit spezifischen optimierten Startcodes für je ein Halbbild in den Bildzeilen 309,310 und 622,623 übertragen werden.

4. Haushalts-Endgerät als Vorschaltgerät für handelsübliche Fernsehempfänger zur Durchführung des Verfahrens nach einem der Ansprüche 1 bis 3, umfassend wenigstens einen Antenneneingang und wenigstens einen Ausgang für den Antenneneingang des Videorecorders, gekennzeichnet durch wenigstens zwei Fernsehempfangs-Tuner (24,25) zum Empfang eines laufenden Fernsehprogramms durch den ersten Tuner und eines einzusetzenden Programmteils durch den zweiten Tuner, deren Ausgänge mit einer Überblendbaugruppe (30) verbunden sind sowie eine Decodierschaltungsanordnung (28) zur Decodierung eines Umschalt-Datentelegramms.

5. Haushalts-Endgerät nach Anspruch 4, gekennzeichnet durch eine Synchronrahmen-Detektoranordnung (29) zur Synchronisation der Überblendbaugruppe (30).

6. Haushalts-Endgerät nach Anspruch 5, dadurch gekennzeichnet, daß die Synchronrahmen-Detektoreinrichtung (29) die Überblendbaugruppe (30) von dem Originalprogramm zu dem synchron ausgestrahlen Ersatzprogramm halbbildsynchron in der vertikalen Austastlücke umschaltet.

7. Verfahren zum Betrieb eines Haushalts-Endgeräts mit zwei Tunern und einer Anordnung zur Erfassung des Betriebszustandes eines Videorecorders, dadurch gekennzeichnet, daß der erste Tuner zum Empfang des Originalprogramms und der zweite Tuner zum Empfang des Ersatzprogramms eingestellt wird, daß der zweite Tuner die am Videorecorder eingestellte Frequenz durch einen Scanning- und Vergleichsdurchlauf erfaßt, wenn das Originalprogramm gesendet wird, wobei der zweite Tuner kontinuierlich zwischen einem Empfangsmodus und einem Scanning-Modus umgeschaltet wird, und daß beim Empfang eines Codesignals für das Ersatzprogramm der Scanning-Vorgang durch den zweiten Tuner abgebrochen und vom ersten Tuner übernommen wird.

## Claims

1. A method for the replacement of a defined program part of a TV program during the transmission, by a separately transmitted program part for defined, selected receivers, in particular of a TV advertising spot by another advertising spot of a new product to be tested, characterized in that bi-phase-modulated start codes in the form of a switching data telegram for the part of the program which is transmitted separately are transmitted in the picture lines outside of the TV picture visible on the video screen for the control of the TV signals for the program part to be substituted.

2. A method in accordance with claim 1, characterized in that the start codes are arranged at the lower edge of the total TV picture transmitted or at the corresponding picture information.

3. A method in accordance with claim 2, characterized in that two data telegrams with specific, optimized start codes are transmitted for each field in picture lines 309, 310 and 622, 623.

4. A household terminal in the form of an interposed device for commercially available TV receivers, for executing the method in accordance with one of claims 1 to 3, comprising at least one antenna input and at least one output for the antenna input of the video recorder, characterized by at least two TV receiving tuners (24, 25), the outputs of which are connected with a fade-over component (30), as well as a decoding circuit arrangement (28) for decoding a switching data telegram.

5. A household terminal in accordance with claim 4, characterized by a synchronous frame detector arrangement (29) for synchronizing the fade-over component (30).

6. A household terminal in accordance with claim 5, characterized in that the synchronous frame detector arrangement (29) field-synchronously switches the fade-over component (30) from the original program to the synchronously transmitted substitute program in the vertical black-out gap.

7. A method for operating a household terminal, with two tuners and an arrangement for detecting the operational state of a video recorder, characterized in that the first tuner is set for receiving the original program and the second tuner for receiving the substitute program, in that the second tuner detects the frequency set at the video recorder by means of a scanning and comparison pass when the original program is being transmitted, the second tuner being continuously switched between a receiving mode and a scanning mode, and in that when a code signal for the substitute program is being received, the scanning operation by the second tuner is stopped and taken over by the first tuner.

## Revendications

1. Procédé pour remplacer une certaine partie de programme d'un programme télévisé, lors de la transmission, par une partie de programme, émise séparément, pour des récepteurs déterminés et sélectionnés, notamment pour remplacer un spot publicitaire télévisé par un autre spot publicitaire pour un nouveau produit devant être testé, caractérisé en ce que pour la commande des signaux de télévision destinés à la partie de programme à remplacer, des codes de départ à modulation biphasée sous la forme de télégrammes de données de commutation pour la partie de programme qui est émise séparément sont transmis dans les lignes d'image en dehors de l'image télévisée visible sur l'écran.

2. Procédé selon la revendication 1, caractérisé en ce que les codes de départ sont placés au bord inférieur de l'image télévisée globale transmise, ou de l'information correspondante d'image.

3. Procédé selon la revendication 2, caractérisé en ce que deux télégrammes de données ayant des codes de départ qui sont spécifiques et optimisés sont transmis pour chaque trame dans les lignes d'image 309, 310 et 622, 623.

4. Terminal domestique en tant qu'appareil amont pour des récepteurs usuels de télévision, destiné à la mise en oeuvre du procédé selon l'une des revendications 1 à 3, comprenant au moins une entrée d'antenne et au moins une sortie pour l'entrée d'antenne du magnétoscope, caractérisé par au moins deux syntoniseurs de réception télévisée (24, 25) qui sont destinés à la réception d'un programme télévisé continu par le premier syntoniseur et à celle d'une partie de programme de remplacement par le deuxième syntoniseur et dont les sorties sont reliées à un module de fondu (30), ainsi qu'un circuit de décodage (28) pour décoder un télégramme de données de commutation.

5. Terminal domestique selon la revendication 4, caractérisé par un dispositif de détection de trames de synchronisation (29) qui est destiné à la synchronisation du module de fondu (30).

6. Terminal domestique selon la revendication 5, caractérisé en ce que le dispositif de détection de trames de synchronisation (29) commute le module de fondu (30) à partir du programme initial sur le programme de remplacement qui est émis de manière synchrone, et ce par trames synchrones dans l'intervalle vertical de suppression.

7. Procédé pour l'exploitation d'un terminal domestique ayant deux syntoniseurs et un dispositif pour la détection de l'état de fonctionnement d'un magnétoscope, caractérisé en ce que le premier syntoniseur est réglé pour la réception du programme initial et que le deuxième syntoniseur est réglé pour la réception du programme de remplacement, que le deuxième syntoniseur détecte la fréquence, réglée au niveau du magnétoscope, grâce à un cycle de balayage (scanning) et de comparaison lorsque le programme initial est émis, le deuxième syntoniseur commutant continuellement entre un mode de réception et un mode de balayage, et que, lors de la réception d'un signal codé pour le programme de remplacement, le processus de balayage est interrompu par le deuxième syntoniseur et est pris en charge par le premier syntoniseur.
